# EUROPEAN PATENT APPLICATION

(11) **EP 4 462 731 A1**
(43) Date of publication of application: **13.11.2024**
(21) Application number: 23172609.2
(22) Date of filing: 10.05.2023
(51) Int. Cl.: H04L 9/40, H04L 9/08, H04L 9/16, H04L 9/32, G06F 21/60

(54) **CRYPTOGRAPHIC SYSTEM FOR SECURING CONNECTIONS BETWEEN A SERVER AND A CLIENT AND METHOD THEREOF**

(71) Applicant: Siemens Aktiengesellschaft, 80333 München (DE)
(72) Inventor: Aghaie, Anita, 81379 Munich (DE); Aschauer, Hans, 81829 München (DE); Che, Kai, 80636 München (DE); De Santis, Fabrizio, 80634 München (DE); Falk, Rainer, 85435 Erding (DE); Furch, Andreas, 85354 Freising (DE); Safieh, Malek, 81539 München (DE); Schneider, Daniel, 80796 München (DE); Vaira, Antonio, 81379 München (DE); Zeschg, Thomas, 81543 München (DE); Zwanzger, Johannes, 85579 Neubiberg (DE)
(74) Representative: Siemens Patent Attorneys

(57) **Abstract**

The invention relates to a cryptographic system for securing connections between a server and a client, comprising: an input module, configured to receive an information about a connection between the server and the client; a security level assignment module, configured to assign a security level to the connection based on the received information; a cryptographic key library module, configured to store at least a first cryptographic key and a second cryptographic key; a selection module, configured to select the first cryptographic key if the security level assigned to the connection is above a threshold, and to select the second cryptographic key if the security level assigned to the connection is at or below the threshold; and a control module, configured to deploy the selected cryptographic key to secure the connection.

## Description

The present invention relates to a cryptographic system for securing digital connections between a server and a client. The invention further relates to a computer-implemented method for the securing of such digital connections.

The invention is mostly described with respect to classical asymmetric cryptography but the principles of the invention have a broader scope and apply equally well to, for instance, symmetric cryptography or post-quantum cryptography.

Herein and in the forthcoming, independent of the grammatical term usage, individuals with male, female or other gender identities are included within the term.

Cryptographic systems or cryptosystems are an essential element to secure data transmission between a sender and a receiver through a communication channel based on electronic means. Every communication or transaction that takes places through the internet needs to be encrypted in order to avoid a third party to have access to the communication. This encompasses a large amount of everyday operations, including E-Mail exchanges, online payments per Browser or through credit cards, or generic bank transactions.

Secure communications are based on cryptographic protocols, which ensure the integrity, confidentiality, authentication and non-repudiation of the communication, thereby providing security to both the sender and the receiver of the communication.

In securing a connection, a sender and a receiver need to establish a secure channel. Both parties have to authenticate and to carry out a key agreement protocol. The authentication, in a client-server connection, depends upon credentials, typically X.509 certificates, and the capability of the authenticating party to prove possession of a private key that corresponds to the public key certified by a Trust Provider in the X.509 certificate itself. The existence of a key pair (a private and a public key) is the basis of asymmetric (or public-key) cryptography. In contrast, symmetric cryptography is based on the use of a single key, which has to be shared between the parties.

The security of the X.509 certificates, and hence the security of the authentication protocol, relies for instance on asymmetric cryptography algorithms, which take the original message (or plaintext) and generate a corresponding cipher-text. The encryption mechanism is typically based on a mathematical problem whose solution has been proven to be difficult, such that decryption of the message would amount to providing a solution algorithm to the mathematical problem. Well-known algorithms are the Rivest-Shamir-Adleman (RSA) algorithm, based on the prime factorization of large numbers, or the elliptic curve cryptography (ECC) algorithm, based on the discrete logarithm problem.

The establishment of a secure channel where the communication between the parties can take place relies on the strength of these algorithms against third party attacks. An encryption algorithm is deemed as strong if it can be broken on a timescale much larger than the one required to complete the communication.

In recent years, there have been increasing concerns about the possibility that third party cryptanalytic attacks aided with quantum computers might compromise the security of existing encryption algorithms. This is based on the certainty that quantum computers can outperform the processing power of conventional computers and make the encryption algorithms more vulnerable, especially when the so-called Shor's and Grover's algorithms are implemented.

This is expected to be especially problematic during the transition period to the so-called post-quantum cryptography, in which classical cryptography will have to face the threats of quantum-enabled cryptanalytic attacks.

Currently, there are only very few proposed mechanisms to make classical encryption systems safe against quantum-enabled adversary attacks, i.e., to increase the expected timescale for the algorithms to be broken to render the attacks irrelevant. For instance, in the ECC algorithm, the parameters of the underlying elliptic curve, traditionally considered public information, could be kept secret, so that a quantum attack should first guess them before setting the attack on the cryptographic algorithm. Another proposal is to use symmetric cryptography together with out-of-band mechanisms.

The vulnerability of certain instances of RSA or ECC algorithms to a quantum enabled adversary depends, among other aspects, on the complexity of the key sizes and (for ECC) the type of curve of a given instantiation of the cryptographic algorithm. For example, RSA2048 is weaker than RSA4096, and a quantum computer with less resources would be required to break it, i.e., the security of RSA2048 can be compromised before the security of RSA4096. However, increasing the complexity of the algorithms also affects their performance. For example, RSA4096 will be at least an order of magnitude slower than RSA2048 or ECC256 when calculating a digital signature.

It is an object of the present invention to provide a cryptographic system for securing connections (or communications), which makes it possible to use the computational resources of the sender and receiver in an optimized way, allowing a flexible and efficient use of cryptographic keys for protecting communications against quantum-enabled adversarial attacks.

The purpose of this invention is achieved through a cryptographic system with the features disclosed in claim 1 and a computer-implemented method with the features detailed in claim 13. Preferred embodiments of the invention with advantageous features are given in the dependent claims.

A first aspect of the invention provides a cryptographic system for securing connections between a server and a client, comprising: an input module, configured to receive an information about a connection between the server and the client; a security level assignment module, configured to assign a security level to the connection based on the received information; a cryptographic key library module, configured to store at least a first cryptographic key and a second cryptographic key; a selection module, configured to select the first cryptographic key if the security level assigned to the connection is above a threshold, and to select the second cryptographic key if the security level assigned to the connection is at or below the threshold; and a control module, configured to deploy the selected cryptographic key to secure the connection.

Herein and in the forthcoming, a server and a client are to be understood as (at least partially) computing systems each able to establish a connection consisting in sending and receiving communications through digital channels, e.g., the internet. Depending on the nature of the communications, the server can be the sender and the client the receiver, or vice-versa.

In the following, whenever a third party is mentioned, it will be understood as any untrusted entity that acts as an eavesdropper, i.e., different from the server and the client, and with the will to set up cryptanalytic attacks to break the encryption of the communications sent through the connection.

Under the term connection is to be understood any communication between the sender and the client, e.g., authentications, security protocols such as key agreements protocols, or the message itself to be exchanged. In the following the terms connection and communication will be used indistinguishably.

Cryptographic keys refer to strings of data used to by a cryptographic algorithm to encrypt plain text into cipher text or to decrypt cipher text to recover the original plain text. Cryptographic keys comprise those keys (symmetric or asymmetric) used in classical as well as post-quantum cryptography. A symmetric cryptographic key is one that is shared by the server and the client. An asymmetric cryptographic key or asymmetric cryptographic key pair consists of a private key and a public key, wherein the private key is only known to the sender. Every cryptographic key comes with an associated certificate or a credential, e.g., a X.509 credential.

The different modules and units mentioned in this application are broadly understood as entities capable of acquiring, obtaining, receiving or retrieving generic data and/or instructions through a user interface and/or programming code and/or executable programs or any combination thereof. In particular, they can be adapted to run programming code and executable programs and to deliver the results for further processing.

The different modules and the different units mentioned hereafter, or parts thereof, may therefore each contain, at least, a central processing unit (CPU) and/or at least one graphics processing unit (GPU) and/or at least one field-programmable gate array (FPGA) and/or at least one application-specific integrated circuit (ASIC), and/or any combination of the foregoing. Each of them may further comprise a working memory operatively connected to the at least one CPU and/or a non-transitory memory operatively connected to the at least one CPU and/or the working memory. Each of them may comprise or consist of an application program application (API). Each of them may be implemented partially and/or completely in a local apparatus and/or partially and/or completely in a remote system such as by a cloud computing platform.

All of the elements of the system of the invention may be realized in hardware and/or software, cable-bound and/or wireless, and in any combination thereof. Any of the elements may comprise an interface to an intranet or the Internet, to a cloud computing service, to a remote server and/or the like.

In particular, the system of the invention may be implemented partially and/or completely in a local apparatus, e.g. a computer, in a system of computers and/or partially and/or completely in a remote system such as a cloud computing platform.

In systems based on cloud computing technology, a large number of devices is connected to a cloud computing system via the Internet. The devices may be located in a remote facility connected to the cloud computing system. For example, the devices can comprise, or consist of, equipment, sensors, actuators, robots, and/or machinery in an industrial set-up(s). The devices can be medical devices and equipment in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as `cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

A second aspect of the present invention provides a computer-implemented method for securing connections between a server and a client, comprising the following steps: (a) receiving an information from the server about a connection; (b) assigning a security level to the connection based on the received information; (c) selecting a first cryptographic key if the security level assigned to the connection is above a threshold, and to select the second cryptographic key if the security level assigned to the connection is at or below the threshold; and (d) deploying the selected cryptographic key to secure the connection.

In particular, the method according to the second aspect of the invention may be carried out by the system according to the first aspect of the invention. The features and advantages disclosed herein in connection with the computing device are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide a cryptographic system that can efficiently adapt the computational resources of the parties involved in a communication to achieve, on a case by case basis, an optimal balance between the security needs of the communication and the performance of the parties. This is achieved by the deployment of at least two classical key pairs with different cryptographic strength. The stronger key will be selected for communications which have high security requirements whereas the weaker key will be selected for those communications with comparatively lower security requirements.

The device as described above allows for a simple implementation of a computer-implemented method comprising a number of steps. In one step, information about the security requirements of a communication is received. In another step, a security level is assigned to the prospective communication based on the received information about the security requirements. In a subsequent step, a cryptographic key is selected based on the security level assigned to the communication. In another step, the cryptographic key is deployed to secure the communication.

One advantage of the present invention is that it provides a mechanism to optimize the computational resources of the parties involved in a communication by assessing, on a case by case basis and depending on the security requirements of the communication, the most efficient cryptographic key combination to use. This flexibility makes it possible, in particular, to encrypt different messages inside the communication between two parties with different keys. This flexibility also avoids using unnecessarily sophisticated keys for certain communications, thus using the computational resources more effectively.

A further advantage of the present invention is that it relies entirely on classical cryptographic methods, and can thus be used especially for devices not equipped with post-quantum cryptography to face the attacks of third parties equipped with quantum computers.

An additional advantage of the present invention is that it can be used in combination with the existing mechanisms to deter cryptanalytic attacks mentioned above, thus increasing the range of combinations to match the security requirements of the communications.

Advantageous embodiments and further developments follow from the dependent claims as well as from the description of the different preferred embodiments illustrated in the accompanying figures.

According to some embodiments, refinements, or variants of embodiments, at least the first cryptographic key is an asymmetric key pair comprising a private key and a public key, wherein the private key is secret, i.e., only known by the owner of the first cryptographic key, while the public key can be shared.

In comparison with symmetric cryptography, in asymmetric cryptography (or public-key cryptography) the cryptographic keys do not need to be exchanged. In this respect, asymmetric cryptography is acknowledged to be more secured than symmetric cryptography. It is therefore advantageous to have the first cryptographic key, which conventionally will be considered to be the stronger key, as an asymmetric key.

Additionally, having an asymmetric cryptographic key makes the system adapted to support, in particular, digital signatures. A digital signature is an encrypted output used to verify the authenticity and integrity of data. The private key is used by the sender to generate the signature, while the corresponding public key is used by the receiver to verify the signature. The public key can validate the signature generated with the private key without having knowledge of the private key.

According to some embodiments, refinements, or variants of embodiments, the control module comprises a key exchange unit, configured to deploy an asymmetric first cryptographic key for exchanging the second cryptographic key between the server and the client, wherein the second cryptographic key is a symmetric key used to secure the connection between the server and the client.

Key algorithms that rely on asymmetric cryptography are usually more computationally intensive than symmetric ones. Symmetric cryptography can encrypt and decrypt data quickly and it is easy to implement. As a counterpart, symmetric cryptography requires the exchange of the key between the parties, which poses a security challenge. It is therefore advantageous to employ a hybrid cryptosystem, in which the first (asymmetric) cryptographic key is used to implement an asymmetric key exchange algorithm to encrypt and exchange the second (symmetric) cryptographic key. The second key, which is now shared, is then used to secure the communication by using a symmetric key encryption algorithm, such as Advanced Encryption Standard (AES). This hybrid procedure is at the basis of the operation of protocol schemes such as Pretty Good Privacy (PGP), Secure Shell (SSH) or Transport Layer Security (TLS). Using an asymmetric key exchange protocol to share a symmetric key has the advantage of securing the key exchange, while providing the higher data throughput of symmetric key cryptography over asymmetric key cryptography to transmit the data of the communication.

According to some embodiments, refinements, or variants of embodiments, the cryptographic key library module is further configured to store a plurality of different cryptographic keys, wherein each cryptographic key is associated with a security level and/or is associated with a specific client.

Without departing from the principles of the invention, more flexibility can be achieved is the number of keys stored in the cryptographic key library module is larger than two. In this way, also customized solutions, depending on the nature of the communication or the client can be envisioned. The different cryptographic keys can preferably cover a broad range of security levels, but they can also be partially clustered, i.e., some keys might be adapted for similar security requirements.

According to some embodiments, refinements, or variants of embodiments, the cryptographic system of the invention further comprises a key derivation module, configured to generate the first cryptographic key based on a random value provided at the initialization time of the system.

In other words, this random value or random number is a pre-shared code that is used to initialize a key derivation function (KDF) in order to generate the first cryptographic key. This increases the strength of the first cryptographic key, which does not need to be shared but can be generated from this seed information. The random number can also be introduced in the system during the manufacturing time. This is especially advantageous if the communications using the first cryptographic key are to be established between a server and a trust provider. In this case, the random number can be used to deterministically derive a first cryptographic key by both the trust provider and the server. In a variant of the embodiment, it is also possible to use this pre-shared random number even when no decision has been made regarding the encryption mechanism. For instance, it can be later decided which key derivation function (bcrypt, crypt, scypt, PBKDF2, etc.) is to be used. In this case, the key generation algorithm, and the cryptographic algorithm itself (e.g., a signature algorithm) can be implemented in a device-independent firmware update.

In one embodiment of the invention, the first cryptographic key can be a symmetric key. In this case, the pre-shared code is the mechanism to share the key between the server and the trust provider, thereby providing a secure key exchange mechanism.

In some other embodiments of the invention, the introduction of pre-shared random values can be used to replace or update cryptographic keys without the need to exchange this information. In a related variant of the embodiment, several versions of the first cryptographic key are pre-provisioned, for instance through a sequence of random numbers inserted at initialization or manufacture time.

In some other embodiments, when the first cryptographic key is an asymmetric key generated from a random value, the trust provider might be instructed to delete the private key and only keep the public key. This way, the exposure of the private key, which has to be used only by the server, is reduced.

According to some embodiments, refinements, or variants of embodiments, the key derivation module is further configured to use the first cryptographic key and/or the second cryptographic key as key encrypting keys to generate session keys. Thus, a number of keys can be used as master keys to generate or derive working keys or ephemeral keys. For this a similar or a different key derivation function as the one mentioned above can be implemented. This is especially advantageous in case no suitable pre-existing key is in storage. With such a key agreement protocol one can customize the cryptographic key to the specific needs of each communication. Additionally, the ephemeral keys can be intended for a single use. Thus, forward secrecy can be easily embedded into the cryptographic system of the invention.

According to some embodiments, refinements, or variants of embodiments, the control unit comprises a key renewal unit, configured to deploy the first cryptographic key for a connection conducive to the renewal of the second cryptographic key. Thus, the first cryptographic key, which is generally less used than the second cryptographic key, can be employed to renew, replace or generate new second cryptographic keys when their certificates expire. In one variant of the embodiment, the first cryptographic key is used to secure a communication channel to a trust service provider, which generates the new second cryptographic key. However, it is also imaginable that the same mechanism is applied for the renewal, replacement or recertification of the first cryptographic key, namely the second cryptographic key is used to secure the communication with a trust service provider to issue a new first cryptographic key upon expiration of the existing one.

According to some embodiments, refinements, or variants of embodiments, the selection module is further configured to deploy the second cryptographic key and the first cryptographic key for an authentication of the server on a connection. This is especially advantageous in cases where an authentication with one key is deemed insufficient. This can happen during the authentication phase (i.e., before the communication between the parties has started) or at a later time during the communication, for instance, because for some of the content of the communication higher security standards have to be met. In these cases one can speak of an on-demand authentication, according to which further authentication may be requested to match increasing security requirements.

According to some embodiments, refinements, or variants of embodiments, the selection module is further configured to implement an out-of-band authentication scheme, preferably a post-quantum safe hash-based signature scheme.

Out of band authentication (OOBA) mechanisms and out-of-band procedures more generally describe procedures in which the authentication communication channel differs from the message-transmission channel. By effectively using two different channels the risk of interception through an attack is reduced. In particular, if the out-of-band authentication is intercepted by a third party the message of the communication is not compromised. In this respect, hash-based signatures (HBSs) are digital signature schemes that offer flexibility, since they support different levels of security and sophistication.

According to some embodiments, refinements, or variants of embodiments, the selection module is further configured to select the first cryptographic key and/or the second cryptographic key and an out-of-band procedure, thus leading to a security increase. This can be advantageous when a combination of keys is found more suitable than each of the pre-existing keys alone, or than the generation of a new generation key. The incorporation of an out-of-band procedure provides an additional increase of security.

According to some embodiments, refinements, or variants of embodiments, the selection module is further configured to deploy the second cryptographic key for the authentication of the client and use the thereby established secured connection for the authentication of the server with the first cryptographic key, wherein the public key of the first cryptographic key is kept secret.

In other words, the exposure of the first cryptographic key is reduced by using the second cryptographic key to establish the secure connection. Since the second cryptographic key is used to establish the connection, the public key of the first cryptographic key does not need to be used and can be kept unexposed. In a variant of the embodiment, the second cryptographic key can be replaced by a session key derived using the first cryptographic key as master key.

According to some embodiments, refinements, or variants of embodiments, the cryptographic system supports post-quantum cryptography and the first cryptographic key is a post-quantum key pair.

The invention is meant to be advantageous for devices that do not support quantum cryptography, especially in the transition period where attacks from quantum computers can put them at a disadvantage. However, the scope of the invention is not limited to such devices and its use can be extended to devices that support quantum cryptography. The advantages are in these cases analogous: a major protection against attacks from third parties as well as an increased efficiency in the use of computational resources.

Although here, in the foregoing and also in the following, some functions are described as being performed by modules or units, it shall be understood that this does not necessarily mean that such modules or units are provided as entities separate from one another. In cases where one or more modules or units are provided as software, the modules or units may be implemented by program code sections or program code snippets, which may be distinct from one another but which may also be interwoven or integrated into one another.

Similarly, in cases where one or more modules or units are provided as hardware, the functions of one or more modules or units may be provided by one and the same hardware component, or the functions of several modules or units may be distributed over several hardware components, which need not necessarily correspond to the modules or units. Thus, any apparatus, system, method and so on which exhibits all of the features and functions ascribed to a specific module or unit shall be understood to comprise, or implement, said module or said unit. In particular, it is a possibility that all modules or units are implemented by program code executed by the computing device, for example a server or a cloud computing platform.

The above embodiments and implementations can be combined with each other as desired, as far as this is reasonable.

Further scope of the applicability of the present method and system will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:
- Fig. 1: is a schematic depiction of a cryptographic system for securing connections between a server and a client according to an embodiment of the present invention;
- Fig. 2: is a block diagram showing an exemplary embodiment of a computer-implemented method for securing connections between a server and a client according to the present invention;
- Fig. 3: is a pictorial illustration of exemplary server-client connections according to an embodiment of the present invention;
- Fig. 4: is a pictorial illustration of exemplary server-client connections according to another embodiment of the present invention;
- Fig. 5: is a schematic illustration of the lifetimes of the different cryptographic keys according to some embodiments of the present invention;
- Fig. 6: is a schematic block diagram illustrating a computer program product according to an embodiment of the third aspect of the present invention; and
- Fig. 7: is a schematic block diagram illustrating a non-transitory computer-readable data storage medium according to an embodiment of the fourth aspect of the present invention.

Parts in the different figures that correspond to the same elements have been indicated with the same reference numerals.

The components in the drawings are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

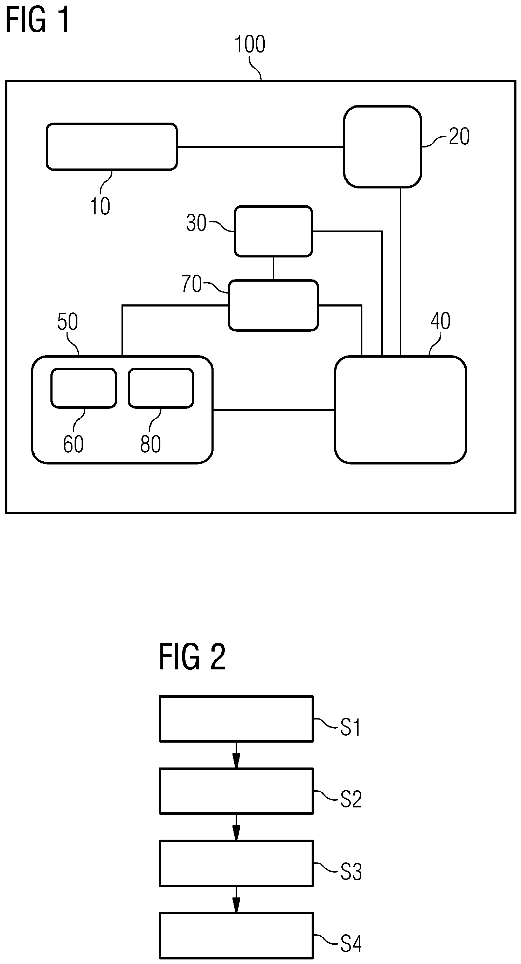

Fig. 1 shows a schematic depiction of a cryptographic system 100 for securing connections between a server and a client according to an embodiment of the present invention.

The system 100 depicted in Fig. 1 comprises an input module 10, a security level assignment module 20, an cryptographic key library module 30, a selection module 40, a control module 50, and a key derivation module 70.

The input module 10 is configured to receive information from a connection that needs to be established and secured between a server and a client. The input module 10 can, for instance, comprise or consist of an application program interface API. Quite generically, the input module 10 can contain, at least, a central processing unit, CPU, and a working memory. It can be implemented in a local apparatus, e.g., on the server and on the client, or be implemented on a separated hardware device, wired or wirelessly connected to the server and the client. Alternatively, it can be implemented on a cloud platform.

The security level assignment module 20 is configured to assign a security level to a connection. This security level can be determined by the server or the client or, alternatively, determined based on the information about the connection received by the input module 10. The security level assignment module 20 can comprise any computing apparatus equipped with data processing capabilities. In particular, it can implement a number of algorithms to determine the security level required by the connection. In some embodiments of the invention, the algorithms can be aided by artificial intelligence methods.

The cryptographic key library module 30 is configured to store at least a first cryptographic key and a second cryptographic key. In some of the embodiments, it can store an arbitrary number of cryptographic keys. Such keys can be symmetric cryptographic keys, asymmetric cryptographic keys or a combination thereof. In some of the embodiments of the invention, some of the keys can be based on post-quantum cryptography. The different cryptographic keys contain information about the security standards that they can satisfy. Some of the keys can also be customized, e.g., be task-specific or client-specific. The cryptographic key library module 30 can comprise an application program application (API), through which it can receive new cryptographic keys to be stored.

The selection module 40 is configured to select among different cryptographic keys depending on the security level that is assigned to the communication to be secured. This can be implemented in a number of ways. For simplicity, one can consider the case where a first and a second cryptographic keys are present. A (security level) threshold can be defined, such that if the security level assigned to the connection is above the threshold, the first cryptographic key is selected. If the security level assigned to the connection is at or below the threshold, the second cryptographic key is selected. This procedure can be easily generalized to the case where N cryptographic keys are available, for instance, by providing N-1 thresholds, such that each cryptographic key covers a range of security levels. The selection of the keys can also be supported by additional client- or task-specific information. For instance, a specific client can support only a subset of the stored cryptographic keys. In this case, the selection of keys will be restricted to this subset.

In some embodiments of the invention, the selection module 40 is further configured to deploy more than one key (e.g., the second cryptographic key and the first cryptographic key) for an authentication of the server on a connection. This can happen, e.g., during a communication, when some of the content to the transmitted has higher security standards that have to be matched with an increased security level.

In some other embodiments, the selection module 40 is further configured to implement an out-of-band authentication scheme, for instance some of the existing post-quantum safe hash-based signature schemes. Out-of-band procedures, in which the authentication communication channel differs from the message-transmission channel can be used to better match the security requirements of a communication.

According to some other embodiments, the selection module 40 can be further configured to select the first cryptographic key and/or the second cryptographic key and an out-of-band procedure, thus leading to a security increase.

In some other embodiments, the selection module 40 is further configured to deploy the second cryptographic key for the authentication of the client and use the thereby established secured connection for the authentication of the server with the first cryptographic key, wherein the public key of the first cryptographic key is kept secret. Other combinations of keys or variations leading to reduced exposure of the keys in order to increase the security of the communication are also supported by the invention. For instance, in a variant of this embodiment, the second cryptographic key can be replaced by a session key derived using the first cryptographic key as master key.

The control module 50 is configured to deploy a cryptographic key to secure a connection, preferably a key selected by the selection module 40. The control module 50 can provide the cryptographic key to the encryption system of the server and/or of the client responsible for an authentication, for the establishment of a key protocol, or for encrypting the messages which are part of the communication. In some embodiments, the control module 50 can be implemented in the server or the client.

In some of the embodiments of the invention, such as the one shown in Fig. 1, the control unit 50 comprises a key exchange unit 60 and a key renewal unit 80.

The key exchange unit 60 is configured to deploy an asymmetric first cryptographic key for exchanging the second cryptographic key between the server and the client. In these embodiments, the server and the client use symmetric cryptography. The key exchange unit 60 thus provides a way to explicitly support symmetric cryptography using a hybrid cryptosystem, where the symmetric key exchange is communicated between the server and the client using an asymmetric cryptographic key.

The key renewal unit 80 is configured to deploy the first cryptographic key for a connection conducive to the renewal of the second cryptographic key. The first cryptographic key, which is generally less used than the second cryptographic key, can be employed to renew, replace or generate new second cryptographic keys when their certificates expire. In one variant of the embodiment, the first cryptographic key is used to secure a communication channel to a trust service provider, which generates the new second cryptographic key. However, it is also imaginable that the same mechanism is applied for the renewal, replacement or recertification of the first cryptographic key, namely the second cryptographic key is used to secure the communication with a trust service provider to issue a new first cryptographic key upon expiration of the existing one.

Fig. 1 also shows a key derivation module 70, which is configured to generate the first cryptographic key based on a random value provided at the initialization time of the cryptographic system 100. This random value or random number is a pre-shared code that is used to initialize a key derivation function (KDF) in order to generate the first cryptographic key. The random number can also be introduced in the system also during the manufacturing time. This is especially advantageous if the communications using the first cryptographic key are to be established between a server and a trust provider. In this case, the random number can be used to deterministically derive a first cryptographic key by both the trust provider and the server. In a variant of the embodiment, it is also possible to use this pre-shared random number even before deciding which key derivation function (bcrypt, crypt, scypt, PBKDF2, etc.) is to be used. In one embodiment of the invention, the first cryptographic key can be a symmetric key. In this case, the pre-shared code is the mechanism to share the key between the server and the trust provider, thereby providing a secure key exchange mechanism.

In some embodiments of the invention, the introduction of pre-shared random values can be used to replace or update cryptographic keys without the need to exchange this information. In a related variant of the embodiment, several versions of the first cryptographic key are pre-provisioned, for instance through a sequence of random numbers inserted at initialization or manufacture time.

In some other embodiments of the invention, the key derivation module 70 is further configured to use the first cryptographic key and/or the second cryptographic key as key encrypting keys to generate session keys. These new generated keys can be a one-time use keys. If not, the key generation unit 70 can send them to the cryptographic key library module 30 to be stored for further use.

Fig. 2 is a block diagram showing an exemplary embodiment of a computer-implemented method for for securing connections between a server and a client according to the present invention. The method can be preferably implemented with the cryptographic system 100 described with respect to Fig. 1. The method comprises a number of steps.

In one step S1, information about a connection to be established and secured between a client and a server is received.

In another step S2, a security level is assigned to the connection based on the received information.

In another step S3, a cryptographic key is selected between a first cryptographic key and a second cryptographic key. In some embodiments of the invention, the selection takes places among a number N of cryptographic keys. The selection is based on the assigned security level, but can be complemented with task-specific or client-specific information. In a preferred embodiment with a first and a second cryptographic key, the first cryptographic key is selected if the security level assigned to the communication is above a given threshold, whereas the second cryptographic key is selected if the security level assigned to the communication is at or below the threshold.

In a step S4, the selected cryptographic key is deployed to secure the connection.

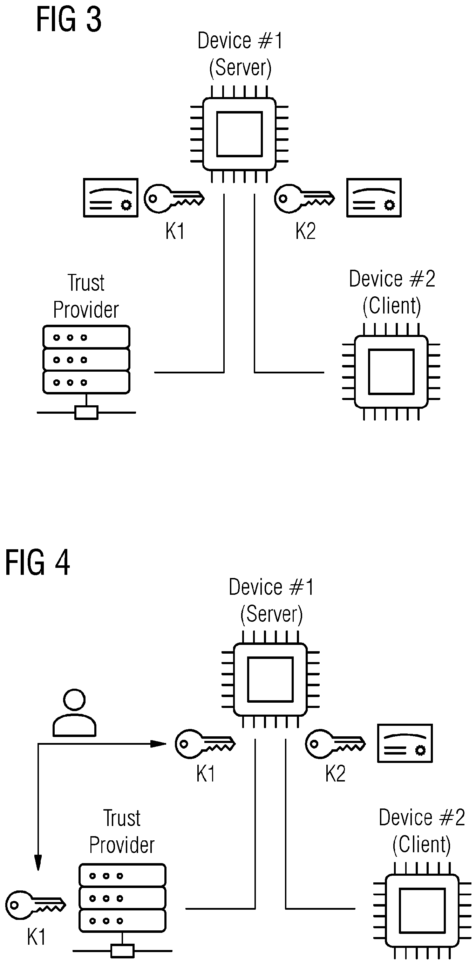

Fig. 3 shows a pictorial illustration of exemplary server-client connections according to an embodiment of the present invention. Fig. 3 shows different user cases involving a Device #1, which acts as a server, a Device #2, which acts as a client, and a Trust Provider. In the embodiment shown in Fig. 3, the server owns a first cryptographic key K1 and a second cryptographic key K2. Both the first cryptographic key K1 and the second cryptographic key K2 are asymmetric, i.e., each are key pairs, each with a private key and a public key. These keys are stored in the cryptographic key library module 30 of the system 100.

The Device #1 (server) wants to set up a secure connection with the Device #2 (client), for instance one involving a digital signature. The input module 10 of the cryptographic system 100 collects information about the communication. Based on this information, the security level assignment module 20 assigns a security level to the connection. This security level is below a certain threshold and the selection module 40 selects the second cryptographic key K2 for the connection.

The server then uses the second cryptographic key K2 (and its associated X.509 certificate) as a signing key to generate a digital signature using the private key of the second cryptographic key K2. The digital signature and the signed data (the signed message) are transmitted to the client. The client can then validate the signature with the public key of the second cryptographic key K2 and verify that the message was unaltered and signed by the server.

The Device #1 (server) can subsequently want to set up a secure connection with a Trust Provider, for instance for the renewal of the second cryptographic key K2. As before, the input module 10 of the cryptographic system 100 collects information about the connection and the security level assignment module 20 assigns a security level to it. This time, the security level is above a certain threshold and the selection module 40 selects the first cryptographic key K1 for the connection.

In this way, the cryptographic system 100 deploys stronger keys, which are also more resource-demanding ones, only for those connections where they are needed. The computational resources of the parties involved in each of the connections are therefore efficiently used.

Fig. 4 shows a pictorial illustration of exemplary server-client connections according to another embodiment of the present invention. As in Fig. 3, in Fig. 4 a Device #1 acts as a server, a Device #2 acts as a client, and a Trust Provider is also present. In contrast to Fig. 3, in Fig. 4 the server and the Trust Provider establish their connections with a symmetric first cryptographic key K1.

In this case, the server and the Trust Provider share the first cryptographic key K1. According to some embodiments of the present invention, no exchange of keys is necessary. A key agreement protocol can be based on a random number, which is inserted or provided initially to the server (i.e., at the manufacturing time or during initialization) by the Trust Provider. This random number can, e.g., be used as a code shared between the server and the Trust Provider to generate the first cryptographic key K1.

In a related variant of the embodiment, a sequence of random numbers inserted at initialization or manufacture time, each related to a cryptographic key, e.g., different versions of a first cryptographic key K1 that can be used sequentially, hereby avoiding the implementation of a renewal procedure of the cryptographic key.

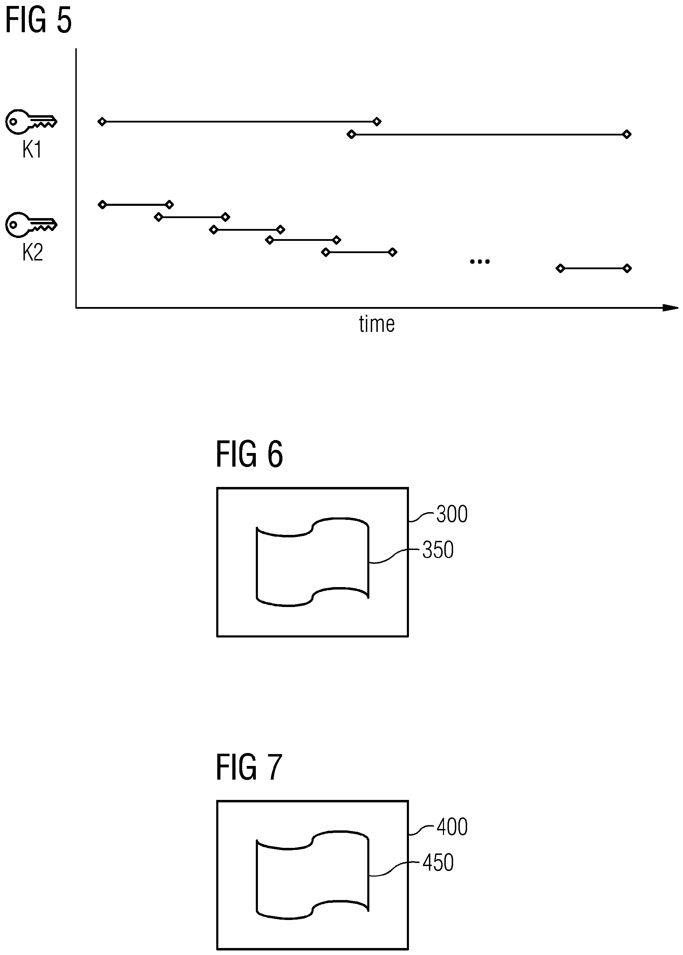

Fig. 5 shows a schematic illustration of the lifetimes of the different cryptographic keys K1, K2 according to some embodiments of the present invention. For concreteness, it is assumed that both the first cryptographic key K1 and the second cryptographic key K2 can be used a similar number of times, i.e., to secure a similar number of connections, for instance digital signatures.

As can be seen from the two lines starting on the left in Fig. 5, the second cryptographic key K2 has a shorter lifetime of the first cryptographic key K1. This is to be expected if the second cryptographic key K2 is used more often than the first cryptographic key K1. In the situation illustrated in Fig. 5, most of the connections have security levels which can be taken care of with the second cryptographic key K2, whereas connections which require the first cryptographic key K1 are less often.

The two lines associated with the first cryptographic key K1 correspond to an original first cryptographic key K1 (line on the left) and to its renewal (line on the right). The renewal of a key starts shortly before the expiration of the validity period. Likewise, the partially overlapping set of lines associated with the second cryptographic key K2 correspond to subsequent renewals of the original second cryptographic key K2.

As discussed above, the renewal of the second cryptographic key K2 can be done using the first cryptographic key K1. In the example shown in Fig. 5, the original first cryptographic key K1 can be used for the renewal of the second cryptographic key K2 four times. Likewise, a valid second cryptographic key K2 can be used to renew the first cryptographic key K1.

Fig. 6 shows a schematic block diagram illustrating a computer program product 300 according to an embodiment of the third aspect of the present invention. The computer program product 300 comprises executable program code 360 configured to, when executed, perform the method according to any embodiment of the second aspect of the present invention, in particular as it has been described with respect to the preceding figures.

Fig. 7 shows a schematic block diagram illustrating a non-transitory computer-readable data storage medium 400 according to an embodiment of the fourth aspect of the present invention. The data storage medium 400 comprises executable program code 460 configured to, when executed, perform the method according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

## Claims

1. A cryptographic system (100) for securing connections between a server and a client, comprising:
an input module (10), configured to receive an information about a connection between the server and the client;
a security level assignment module (20), configured to assign a security level to the connection based on the received information;
a cryptographic key library module (30), configured to store at least a first cryptographic key (K1) and a second cryptographic key (K2);
a selection module (40), configured to select the first cryptographic key (K1) if the security level assigned to the connection is above a threshold, and to select the second cryptographic key (K2) if the security level assigned to the connection is at or below the threshold; and
a control module (50), configured to deploy the selected cryptographic key to secure the connection.

2. The system (100) according to claim 1, wherein at least the first cryptographic key (K1) is an asymmetric key pair comprising a private key and a public key.

3. The system (100) according to claim 2, wherein the control module (50) comprises a key exchange unit (60), configured to deploy the asymmetric first cryptographic key (K1) for exchanging the second cryptographic key (K2) between the server and the client, wherein the second cryptographic key (K2) is a symmetric key used to secure the connection between the server and the client.

4. The system (100) according to any of the previous claims, wherein the cryptographic key library module (30) is further configured to store a plurality of different cryptographic keys, wherein each cryptographic key is associated with a security level and/or is associated with a specific client.

5. The system (100) according to any of the previous claims, further comprising a key derivation module (70), configured to generate the first cryptographic key (K1) based on a random value provided at the initialization time of the system (100) .

6. The system (100) according to claim 5, wherein the key derivation module (70) is further configured to use the first cryptographic key (K1) and/or the second cryptographic key (K2) as key encrypting keys to generate session keys.

7. The system (100) according to any of the previous claims, wherein the control module (50) comprises a key renewal unit (80), configured to deploy the first cryptographic key (K1) for a connection conducive to the renewal of the second cryptographic key (K2).

8. The system (100) according to any of the previous claims, wherein the selection module (40) is further configured to deploy the second cryptographic key (K2) and the first cryptographic key (K1) for an authentication of the server on a connection.

9. The system (100) according to any of the previous claims, wherein the selection module (40) is further configured to implement an out-of-band authentication scheme, preferably a post-quantum safe hash-based signature scheme.

10. The system (100) according to any of the previous claims, wherein the selection module (40) is further configured to select the first cryptographic key (K1) and/or the second cryptographic key (K2) and an out-of-band procedure.

11. The system (100) according to claim 2, wherein the selection module (40) is further configured to deploy the second cryptographic key (K2) for the authentication of the client and use the thereby established secured connection for the authentication of the server with the first cryptographic key (K1), wherein the public key of the first cryptographic key (K1) is kept secret.

12. The system (100) according to any of the previous claims, wherein the system (100) supports post-quantum cryptography and the first cryptographic key (K1) is a post-quantum key pair.

13. A computer-implemented method for securing connections between a server and a client, preferably to be implemented with the system (100) according to any of the claims 1 to 12, comprising the following steps:
receiving (S1) an information from the server about a connection;
assigning (S2) a security level to the connection based on the received information;
selecting (S3) a first cryptographic key (K1) if the security level assigned to the connection is above a threshold, and to select the second cryptographic key (K2) if the security level assigned to the connection is at or below the threshold; and
deploying (S4) the selected cryptographic key to secure the connection.

14. A computer program product (300) comprising executable program code (350), which is configured, when executed, to perform the computer-implemented method according to claim 13.

15. A non-transient computer-readable data storage medium (400) comprising executable program code (450), which is configured, when executed, to perform the computer-implemented method according to claim 13.
